# EUROPEAN PATENT SPECIFICATION

(11) **EP 3 032 900 B1**
(45) Date of publication and mention of the grant of the patent: **08.01.2020**
(21) Application number: 13890897.5
(22) Date of filing: 09.08.2013
(51) Int. Cl.: H04W 72/04, H04L 1/18

(54) **METHOD AND DEVICE FOR FRAME ACKNOWLEDGEMENT**
VERFAHREN UND VORRICHTUNG ZUR FRAMEQUITTIERUNG
PROCÉDÉ ET DISPOSITIF DE TRANSMISSION D'ACCUSÉS DE RÉCEPTION DE TRAMES

(43) Date of publication of application: 15.06.2016
(73) Proprietor: Beijing Nufront Mobile Multimedia Tech. Co., Ltd., Beijing 100084 (CN)
(72) Inventor: LIU, Shenfa, Beijing 100084 (CN); BAO, Dongshan, Beijing 100084 (CN)
(74) Representative: 2K Patentanwälte Blasberg Kewitz & Reichel
(86) International application number: PCT/CN2013/081214
(87) International publication number: WO 2015/018078

(56) References cited:
- WO-A1-2008/084927
- WO-A2-2009/096714
- CN-A- 102 684 852
- CN-A- 103 037 520

## Description

### FIELD OF THE INVENTION

The present invention relates to the field of wireless communications, particularly it relates to a method for frame acknowledgment and to a device.

### BACKGROUND OF THE INVENTION

IEEE 802.11 system is a system based on competition, and the adopted strategy of instant type response (ack) is simple and effective. Such as, ack strategy is widely used in IEEE 802.11a/b/g, namely, feedback ACK frame immediately when station receive unicast frame (such as DATA frame). In IEEE 802.11n system, have employed HT (High Throughput) Block ACK mechanism to batch of data packet united acknowledge, thus improve efficiency. Especially, the block ack strategy of HT immediate-type is a high-efficiency Block ack mechanism among HT stations, namely, when a HT station have sent one batch of aggregate frame and its ack policy position carried is set as normal ack, just acquiescence adopts immediate-type to acknowledge. In addition, IEEE 802.11n also defines delaying type ack strategy, if adopting delaying type ACK, the time delay of packet transmission can increase, and that is adverse to transmitting latency sensitive business.

The existing communication system based on centralized scheduling, such as, in IEEE 802.16 and long-term evolution (Long Term Evolution is called for short LTE) system, all have employed based on hybrid automatic repeat-request (HARQ-ack) mechanism. HARQ mechanism acknowledge on Physical Resource Block, timeliness and validity is guaranteed, but it unavoidably brings the complexity of realization, and compared with other ACK mechanism of the MAC level of IEEE 802.11 system, its reliability is also greatly reduced.

Downlink HARQ mechanism of LTE system is briefly described as follows, The Downlink channel of the system comprises control signal, reference signal and data signal. Wherein, Downlink data signal transmitted in Physical Downlink Shared CHannel (PDSCH), and Packet Data Control Channel(PDCCH) transmits data transmission scheduling result. Uplink signal also comprises control signal and data signal. Physical Uplink Shared CHannel (PUSCH) can be used for transmitting uplink control signal, comprise ACK/NACK, CQI indication etc. HARQ-ack mechanism in LTE system acknowledge on physical sub-frame, and the RLC layer of LTE system needs comparatively complicated segmentation and recombination to ensure to adapt to Transmission Block (TB) of physical layer.

In IEEE 802.16 system, also add H-ARQ strategy, it is necessary to comparatively complicated segmentation to form HARQ sub-packet, H-ARQ acknowledge on HARQ sub-packet. In a word, HARQ result in that the reliability of system is lower and implementation complexity is higher, and validity then increases. The MAC layer of 802.16 systems have employed optional ARQ strategy, but owing to needing to dispatch as uplink data frames using ACK, cause the acknowledge efficiency low and postpone relatively big, implementation complexity is lower.

The ARQ function of the MAC layer of 802.16 systems is optional, and the scheduling of ACK is not instant, and it is also higher that it postpones bigger scheduling complexity. Meanwhile, Its ARQ requires to acknowledge on ARQ-BLOCK, and ARQ-BLOCK sub-packet needs segmentation, causes the efficiency of frame acknowledgment lower.

WO 2009/096714 A2 discloses a method for allocating control channels and a frame structure used in a wireless access system. The method transmits a super-MAP including information regarding a control channel allocation method and control channel allocation information to a receiving end and receives a control signal through an uplink subframe indicated by the control channel allocation information using the control channel allocation method. Thus, the transmitting end can correctly allocate a control channel for each downlink burst.

### SUMMARY OF THE INVENTION

In view of the above, the purpose of the present invention is to provide a method and apparatus for frame acknowledgment. A brief summary is given below to provide a basic understanding of some aspects of the embodiments disclosed. This section of summary is not to provide a general commentary, or to determine the key/important elements or to describe the protection scopes of these embodiments, but is merely to simply present some concepts, which act as a preamble of the subsequent detailed illustration.

One of the results of the present invention is to provide a method for frame acknowledgement according to claim 1 and an apparatus for frame acknowledgement according to claim 8.

Adopting the method or apparatus of the invention, have the following effects:
1. Realize carry out transmission and acknowledgement of data packet with form of MAC frame at MAC layer, and this packet acknowledge taking minimum complexity as cost, it is achieved that minimum acknowledgement time delay and very high reliability.
2. Group aggregation frame G-MPDU seldom comprise fragment, so as to reduce use of fragment.
3.Implementing transmission of ACK Source scheduling mode, configuration uplink and downlink channel, considers from time sequence, short signaling channel is arranged in the front, Scheduling are transmit in signaling feedback channel so as to receive ACK at sending receiving time, time delay is little, and reaction is fast, it is conducive to resource scheduling and retransmitting scheduling;
4. Aggregation G-ACK

To attain the above and related objects, one or more embodiments include the features that will be illustrated in detail below and specifically recited in the claims. The following illustration and drawings illustrate some exemplary aspects in detail; moreover, it only indicates some of the various modes in which the principle of each embodiment may be applied. The invention is defined and limited by the scope of appended claims 1-12. In the following description, any embodiments referred to and not falling within the scope of the appended claims, are merely examples useful to the understanding of the invention.

### BRIEF DESCRIPTION OF THE DRAWING

- Fig. 1: shows the PHY layer frame structure of the newly defined short-distance and medium-distance wireless communication system.
- Fig. 2: is another kind of frame structure diagram provided in embodiment of this present invention.
- Fig. 3: shows structure diagram of G-MPDU.
- Fig. 4: shows structure diagram of G-MPDU.
- Fig. 5: is a flow diagram of method for frame acknowledgment provided in the first embodiment of this present invention.
- Fig. 6: is system frame structure diagram of uplink and downlink scheduling transmission process provided in the second, third and fourth embodiment of this present invention.
- Fig. 7: is another kind of frame structure diagram provided in the fifth embodiment of this present invention.
- Fig. 8: is system frame structure diagram of uplink and downlink scheduling transmission process provided in the 6th - 9th embodiment of this present invention.
- Fig. 9: is a diagram of apparatus for frame acknowledgment provided in the 10th embodiment of this present invention.
- Fig. 10: is a diagram of another apparatus for frame acknowledgment provided in the 10th embodiment of this present invention.
- Fig. 11: is a diagram of another apparatus for frame acknowledgment provided in the 11th embodiment of this present invention.
- Fig. 12: is a diagram of another apparatus for frame acknowledgment provided in the 12th embodiment of this present invention.

### DETAILED DESCRIPTION OF THE INVENTION

The description below and accompanying drawings fully illustrate specific embodiments of the invention, to enable one skilled in the art to implement the embodiments. Modifications, such as structural, logical, electrical and process modifications, can be made in other embodiments. The embodiments only represent some possible variations. Individual components or functions are optional and the operation order is variable, unless it is otherwise stated specifically. A part of and a certain feature of some embodiments may be included in or replaced by a part of and a certain feature of other embodiment. Herein, these embodiments of the invention may be individually or generally represented by the term "invention" for the sake of convenience; moreover, if more than one invention is disclosed actually, it is not intended certainly to limit the application scope to any individual invention or inventive concept.

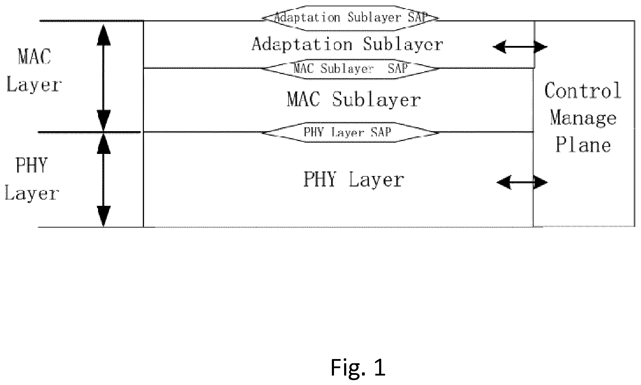

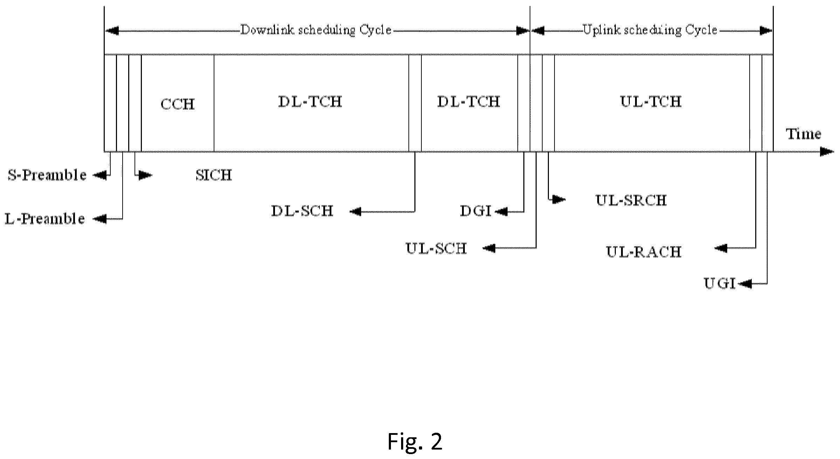

The embodiment of the present invention realizes based on a kind of wireless communication system, and this system possesses following feature, frame cycle is divided into uplink and downlink frame cycle in Physical Frame Structure, and the uplink/downlink frames cycle includes data transmission channel and signaling channel. This wireless communication system needs centralized scheduling, and the resource in downlink frame cycle and uplink frame cycle needs concentrating scheduling by CAP. See Fig. 1, the figure shows the PHY layer frame structure of the newly defined short-distance and medium-distance wireless communication system of , frame structure is as shown in Figure 2. In frame structure, the definition of each sub-channel is as shown in table 1.

**Table 1**

| **Channel Name** | **Function** |
|---|---|
| Short-PreambleSequence | System rough synchronization |
| Long-PreambleSequence | System fine synchronization and Channel Estimation |
| System information channel | 1. Broadcast frame structuralconfiguration |
| SICH | |
| Transmission Control CHannel | 1. Resource scheduling Uplink transmission channel |
| CCH | 2. Resource scheduling Downlink transmission channel |
| DownlinkSoundingchannel | 1. Downlink channel measurement |
| DL-SCH | |
| Uplink Soundingchannel | 1. Uplink channel measurement |
| UL-SCH | |
| Uplink Scheduling Request CHannel | 1. UplinkSchduling Request |
| UL-SRCH | |
| Uplink Random Access CHannel | 1.STAInitial Access |
| UL-RACH | |
| Downlink Transmission | 1. Downlink Service Transmission |
| Control CHannel | 2. Downlink Short Signaling Transmission |
| DL-TCH | |
| Uplink Transmission | 1. Uplink Service Transmission |
| Control CHannel | 2. Uplink Short Signaling Transmission |
| UL-TCH | |
| Downlink Guard Interval | 1. Downlink to Uplink Tx/Rx Guard Interval |
| DGI | |
| Uplink Guard Interval | 1. Downlink to Uplink Tx/Rx Guard Interval |
| UGI | |

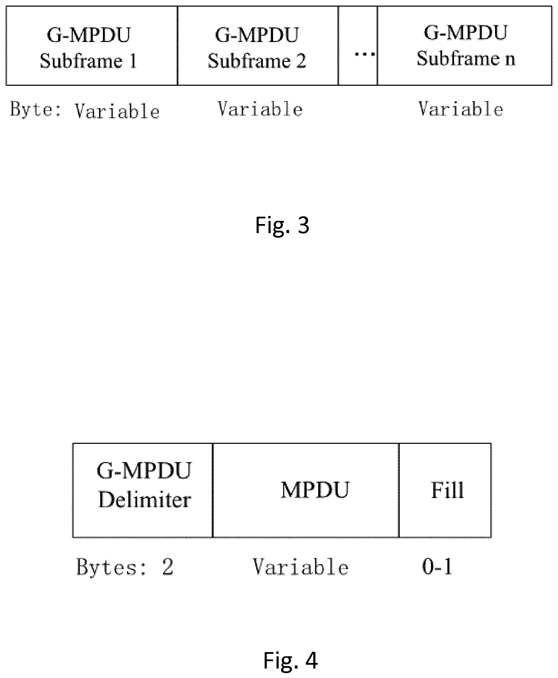

MAC PDU in this system need not carry out complicated burst and cutting, and the formed G-MPDU can be directly sent in DL-TCH and UL-TCH of Physical Frame Structure, as shown in Figure 3 and Figure 4.

Explaination: ACK is usually scheduled in DL-TCH and UL-TCH and transmitted, or be scheduled in short signaling channelIn front oftransmission channel and transmit, when transmit in transmission channel time, it is possible to form G-MPDU together with general data frame. Above-mentioned G-MPDU is to interpret data frame.

The embodiment of the present invention possesses in an employing centralized scheduling wireless communication system of uplink and downlink structure, it is proposed to a kind of MAC level other, general immediate-type ACK strategy, thus realize acknowledge of low delay and high reliability with minimum complexity. The method of frame acknowledgment that the embodiment of the present invention provides, had both been applicable to management frames and data frame. After transmitting terminal transmission frame, receiving terminal returns immediately and acknowledgment response, to inform whether data described in transmitting terminal are successfully received such that it is able to data are sent successfully or not and carries out effective monitoring.

In the embodiment of the present invention, central access point (CAP) is an entity of the STA offer access services for accessed STA ; STA has media access control(MAC) and physical layer (PHY) function interface, the terminal device that can communicate with CAP. Communicating between CAP and STA is carried out by physics frame, each physics frame period comprises downlink cycle and uplink cycle orderly: CAP sends data to STA during downlink cycle ; STA sends data to CAP during uplink cycle.

In this wireless communication system, completing distribution and scheduling function of system resource in CAP, scheduling result is broadcast to user by Resourse Distribute control signal CCH.

Wherein the downlink scheduling of CAP mainly completes Resourse Distribute in the downlink frame cycle: the Resource Distribute of DL-TCH service and generation of CCH control signaling.

Uplink scheduling mainly completes Resourse Distribute in the uplink frame cycle: Resource Distribute of UL-TCH service and generation of CCH control signaling.

The instant type ACK method proposed in embodiment of present invention is realized by the scheduling of system and generate the corresponding CCH control signaling. The uplink and downlink scheduling result information of N frame, it is necessary to be prepared in advance before N frame physics frame is sent.

### Implementation Example 1

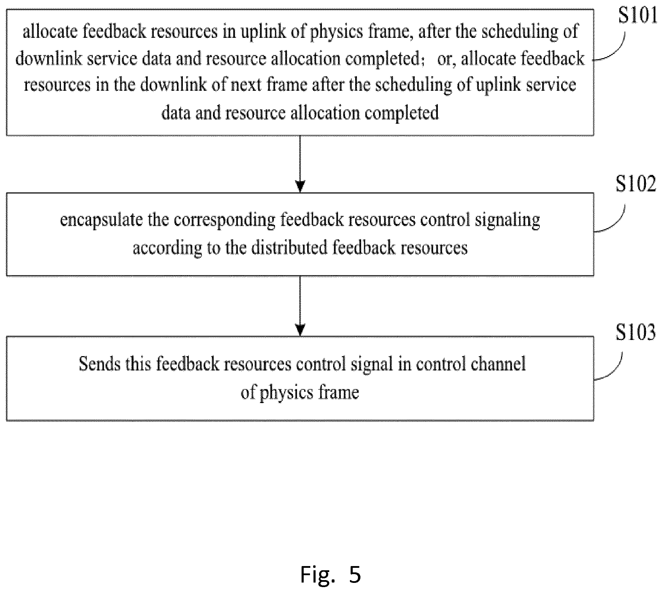

The embodiment of the present invention one proposes a kind of method for frame acknowledgment, as shown in Figure 5, comprising:
Step S101: allocate feedback resources in uplink of physics frame, after the scheduling of downlink service data and resource allocation completed; or, allocate feedback resources in the downlink of next frame after the scheduling of uplink service data and resource allocation completed, used for sending group acknowledge response Group ACK;
Step S102: encapsulate the corresponding feedback resources control signaling according to the distributed feedback resources, this feedback resources control signaling is used for indicating allocation of feedback resources.
Step S103: Sends this feedback resources control signal in control channel of physics frame.

Preferably, feedback resources is: transmission channel resources, or, short signaling channel resource.

Preferably, this control channel can indicate the downlink transmission channel of this frame or the feedback resource allocation of downlink short signaling channel for corresponding user which is scheduled on uplink of previous frame, used for CAP to send group acknowledge response Group ACK; And/or, indicate the uplink transmission channel of this frame or the feedback resource allocation of uplink short signaling channel for corresponding user which is scheduled on downlink of current frame, used for STA to send group acknowledge response Group ACK.

Preferably, after the scheduling of downlink service data and resource allocation completed, also encapsulate downlink transmission resource indication signaling in CAP, used for sending service data. And also it is sent to STA in the control channel of physics frame.

Preferably, what the control channel of this physics frame indicated is the resource allocation conditions of the uplink/downlink of this physics frame, specific as follows:
When feedback resource are allocated in the uplink of this physics frame, then accordingly, sends this feedback resources control signaling in control channel of this physics frame.

When feedback resource are allocated in the downlink of previous physics frame, then accordingly, sends this feedback resources control signaling in control channel ofnext frame.

### Implementation Example 2

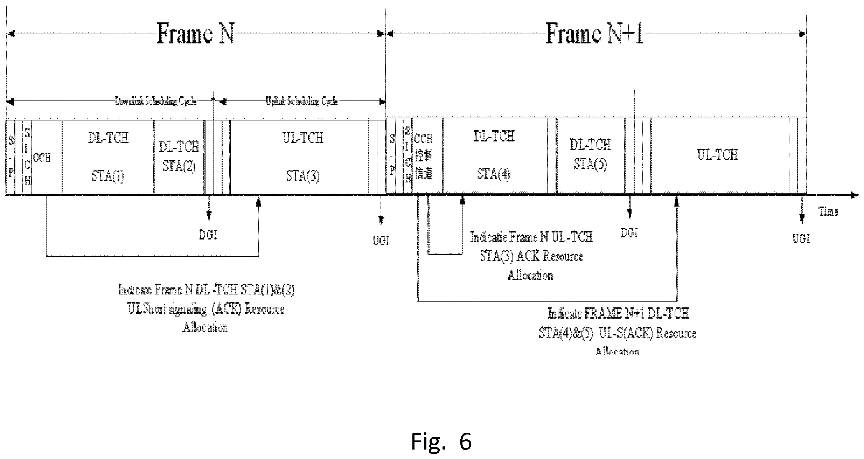

The second embodiment of the present invention proposes a kind of method for frame acknowledgment, as shown in Figure 6, comprising:
Step S201: after the scheduling of downlink service data and resource allocation completed, CAP allocate corresponding uplink feedback resources in uplink transmission channel of N frame for the user scheduled in downlink of N frame, used for sending group acknowledge response Group ACK;
Step S202: according to the allocated feedback resources, CAP encapsulate corresponding feedback resources control signaling, this feedback resources control signaling is used for indicating allocation of feedback resources.

Preferably, after scheduling of downlink service data and resource allocation completed, also encapsulate downlink transmission resource indication signaling in CAP, used for sending downlink service data.

Step S203: CAP sends this feedback resources control signaling in control channel of N frame, this feedback resources control signaling is used for uplink transmission channel resources control.

Preferably, CAP also sends downlink transmission resource indication signaling in the control channel of N frame.

Preferably, it also comprises:
Step S204: user, the STA being scheduledin in downlink carry out demodulation on Control channel in N frame, obtains corresponding downlink transmission resource indication signaling information and uplink transmission channel resource control signaling information.

Preferably, it also comprises:
Step S205: after the user, STA being scheduled in downlink, received the one or more MAC groups MPDU in corresponding downlink transmission resource, generate the acknowledgement response for one or more MPDU, and encapsulate the said acknowledgement response of one or more MPDU as MAC layer group acknowledgement response Group ACK, and send to CAP in the uplink transmission channel of N frame.

Preferably, this control channel can be used for indicating the feedback resource allocation of the corresponding downlink transmission channel of this frame to user scheduled in uplink of previous frame, used for CAP to send group acknowledge response Group ACK; And/or, indicate the feedback resource allocation of the uplink transmission channel to user scheduled in downlink of this frame, used for STA to send group acknowledge response Group ACK.

### Implementation Example 3

The third embodiment of the present invention proposes a kind of method for frame acknowledgment, as shown in Figure 6, comprising:
Step S301: after the scheduling of uplink service data and resource allocation of N frame completed, CAP allocate corresponding uplink feedback resources in uplink transmission channel of N frame for the user scheduled in downlink of N+1 frame, used for sending group acknowledge response Group ACK;
Step S302: according to the allocated downlink transmission channel resources, CAP encapsulate corresponding feedback resources control signaling, this feedback resources control signaling is used for indicating allocation of feedback resources.

Preferably, after scheduling of uplink service data and resource allocation completed, also encapsulate uplink transmission resource indication signaling in CAP, used for sending uplink service data.

Step S303: CAP sends this feedback resources control signaling in control channel of N+1 frame, this feedback resources control signaling is used for downlink transmission channel resources control signaling.

Preferably, CAP also sends uplink transmission resource indication signaling in the control channel of N+1 frame.

Preferably, it also comprises:
Step S304: user, the STA being scheduledin in uplink carry out demodulation on Control channel in N frame, obtains corresponding uplink transmission resource indication signaling information and send service data to CAP; carry out demodulation on Control channel in N+1 frame, obtains corresponding downlink transmission channel resource control signaling information.

Preferably, it also comprises:
Step S305: after the CPA received the one or more MAC groups MPDU in corresponding uplink transmission resource, generate the acknowledgement response of one or more MPDU, and encapsulate the said acknowledgement response of one or more MPDU as MAC layer group acknowledgement response Group ACK, and send in the downlink transmission channel of N+1 frame.

Preferably, this control channel can be used for indicating the feedback resource allocation of the corresponding downlink transmission channel of this frame to user scheduled in uplink of previous frame, used for CAP to send group acknowledge response Group ACK; And/or, indicate the feedback resource allocation of the uplink transmission channel to user scheduled in downlink of this frame, used for STA to send Group ACK.

### Implementation Example 4

The fourth embodiment of the present invention proposes a kind of method for frame acknowledgment, as shown in Figure 6, comprising:
StepS401: after the scheduling of downlink service data and resource allocation of N frame completed, CAP allocate corresponding uplink feedback resources in uplink transmission channel of N frame for the user scheduled in downlink of N frame, used for sending MAC layer group acknowledge response Group ACK;
Step S402: according to the allocated uplink transmission channel resources, CAP encapsulate corresponding feedback resources control channel signaling, this feedback resources control signaling is used for indicating allocation of feedback resources.

Preferably, after scheduling of downlink service data and resource allocation completed, also encapsulate downlink transmission resource indication signaling in CAP, used for sending downlink service data.

Step S403: CAP sends this feedback resources control signaling in control channel of N frame, this feedback resources control signaling is uplink short signaling channel resources control signaling.

Preferably, CAP also sends downlink transmission resource indication signaling in the control channel of N frame.

Preferably, it also comprises:
Step S404: the user, STA being scheduled in uplink carry out demodulation on Control channel in N frame, obtains corresponding downlink transmission resource indication signaling information and uplink transmission channel resource control signaling information.

Preferably, also comprise:
Step S405: after the user, STA being scheduled in uplink received the one or more MAC groups MPDU in corresponding uplink transmission resource, generate the acknowledgement response of one or more MPDU, and encapsulate the acknowledgement response of one or more MPDU as MAC layer group acknowledgement response Group ACK, and send to CAP in the uplink transmission channel of N frame.
StepS406: after the scheduling of uplink service data and resource allocation of N frame completed, CAP allocate corresponding downlink transmission channel resources in downlink of N+1 frame, for the user scheduled in uplink of N frame, used for sending group acknowledge response Group ACK;
Step S407: according to the allocated downlink transmission channel resources, CAP encapsulate corresponding feedback resources control signaling;

Preferably, after scheduling of uplink service data and resource allocation completed, also encapsulate uplink transmission resource indication signaling in CAP, used for sending uplink service data.

Step S408: CAP sends this feedback resources control signaling in control channel of N+1 frame, this feedback resources control signaling is short signaling channel resources control signaling.

Preferably, CAP also sends uplink transmission resource indication signaling in the control channel of N+1 frame.

Preferably, it also comprises:
Step S409: user, the STA being scheduledin in uplink carry out demodulation on Control channel in N frame, obtains corresponding uplink transmission resource indication signaling information and send service data to CAP; carry out demodulation on Control channel in N+1 frame, obtains corresponding downlink transmission channel resource control signaling information.

Preferably, it also comprises:
Step S410: after the CPA received the one or more MAC groups MPDU in corresponding uplink transmission resource in N frame, generate the acknowledgement response of one or more MPDU, and encapsulate the said acknowledgement response of one or more MPDU as MAC layer group acknowledgement response Group ACK, and send in the downlink transmission channel of N+1 frame.

Preferably, this control channel can be used for indicating the feedback resource allocation of the corresponding downlink transmission channel of this frame to user scheduled in uplink of previous frame, used for CAP to send group acknowledge response Group ACK; And/or, indicate the feedback resource allocation of the uplink transmission channel to user scheduled in downlink of this frame, used for STA to send Group ACK.

### Implementation Example 5

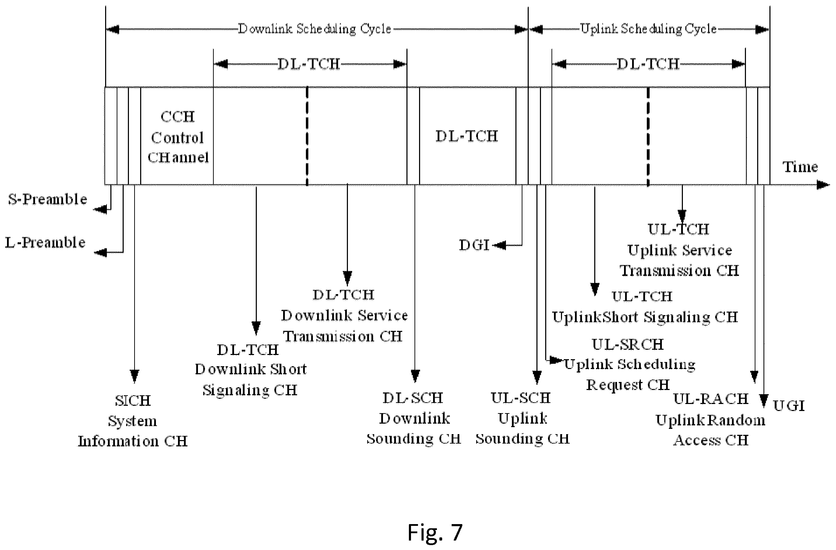

As shown in Figure 7, it is that the DL-TCH downlink transmission channel in the frame structure of Fig. 2 is specifically divided into two parts: head part: DL-TCH downlink short signaling channel, and rear section: DL-TCH downlink transmission channel; UL-TCH uplink transmission channel is specifically divided into two parts: head part: UL-TCH uplink short signaling channel, and rear section: UL-TCH downlink transmission channel. DL-TCH downlink short signaling channel and UL-TCH uplink short signaling channel are for sending ACK; DL-TCH downlink transmission channel and UL-TCH uplink transmission channel are for sending service data.

### Implementation Example 6

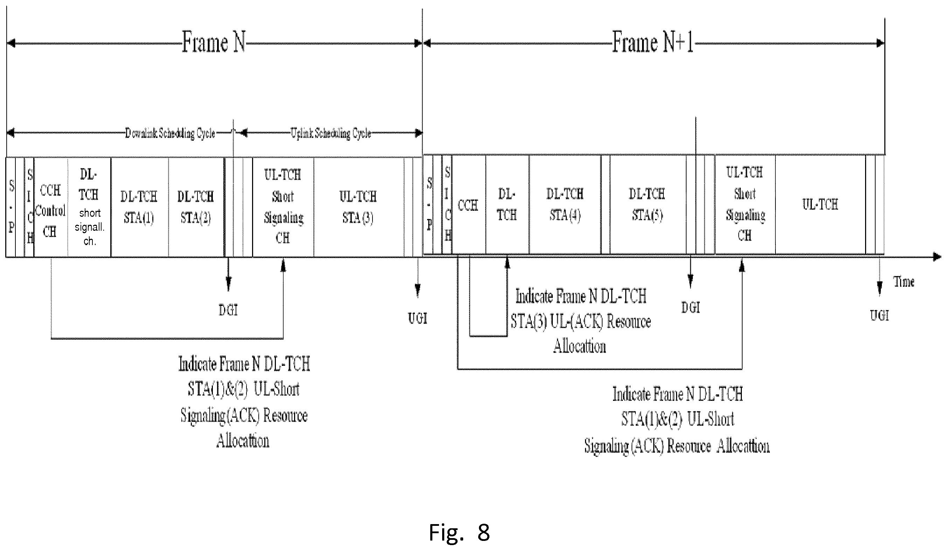

The sixth embodiment of the present invention proposes a kind of method for frame acknowledgment, as shown in Figure 8, comprising:
Step S501: after the scheduling of downlink service data and resource allocation of N frame completed, CAP allocate corresponding uplink feedback resources in uplink transmission channel of N frame for the user scheduled in downlink of N frame, used for sending MAC layer group acknowledge response Group ACK;
Step S502: according to the allocated uplink transmission channel resources, CAP encapsulate corresponding feedback resources control signaling, this feedback resources control signaling is used for indicating allocation of feedback resources.

Preferably, after scheduling of downlink service data and resource allocation completed, also encapsulate downlink transmission resource indication signaling in CAP, used for sending downlink service data.

Step S503: CAP sends this feedback resources control signaling in control channel of N frame, this feedback resources control signaling is uplink short signaling channel resources control signaling.

Preferably, CAP also sends downlink transmission resource indication signaling in the control channel of N frame.

It also can comprise:
Step S504: the user, STA being scheduled in downlink carry out demodulation on Control channel in N frame, obtains corresponding downlink transmission resource indication signaling information and uplink short signaling channel resource control signaling information.

It also can comprise:
Step S505: after the user, STA being scheduled in downlink received the one or more MAC groups MPDU in corresponding uplink transmission resource, generate the acknowledgement response of one or more MPDU, and encapsulate the acknowledgement response of one or more MPDU as MAC layer group acknowledgement response Group ACK.

Preferably, this control channel can be used for indicating the feedback resource allocation of the corresponding downlink short signaling channel of this frame to user scheduled in uplink of previous frame, used for CAP to send group acknowledge response Group ACK; And/or, indicate the feedback resource allocation of the uplink short signaling channel to user scheduled in downlink of this frame, used for STA to send Group ACK.

### Implementation Example 7

The seventh embodiment of the present invention proposes a kind of method for frame acknowledgment, as shown in Figure 8, comprising:
Step S601: after the scheduling of downlink service data and resource allocation of N frame completed, CAP allocate corresponding downlink short signaling channel resources in downlink of N+1 frame for the user scheduled in downlink of N frame, used for sending acknowledge response ACK;
Step S602: according to the allocated downlink short signaling channel resources, CAP encapsulate corresponding feedback resources control signaling, this feedback resources control signaling is used for indicating allocation of feedback resources.

Preferably, after scheduling of uplink service data and resource allocation completed, also encapsulate uplink transmission resource indication signaling in CAP, used for sending uplink service data.

Step S603: CAP sends this feedback resources control signaling in control channel of N+1 frame, this feedback resources control signaling is link transmission channel resources control signaling.

Preferably, CAP also sends uplink transmission resource indication signaling in the control channel of N+1 frame.

Preferably, it also comprises:
Step S604: user, the STA being scheduledin in uplink carry out demodulation on Control channel in N frame, obtains corresponding uplink transmission resource indication signaling information and send service data to CAP; carry out demodulation on Control channel in N+1 frame, obtains corresponding downlink transmission channel resource control signaling information.

Preferably, it also comprises:
Step S605: after the CPA received the one or more MAC groups MPDU in corresponding uplink transmission resource, generate the acknowledgement response of one or more MPDU, and encapsulate the said acknowledgement response of one or more MPDU as MAC layer group acknowledgement response Group ACK, and send in the downlink short signaling channel of N+1 frame.

Preferably, this control channel can be used for indicating the feedback resource allocation of the corresponding downlink short signaling channel of this frame to user scheduled in uplink of previous frame, used for CAP to send group acknowledge response Group ACK; And/or, indicate the feedback resource allocation of the uplink short signaling channel to user scheduled in downlink of this frame, used for STA to send Group ACK.

### Implementation Example 8

The eighth embodiment of the present invention proposes a kind of method for frame acknowledgment, as shown in Figure 6, comprising:
Step S701: after the scheduling of downlink service data and resource allocation of N frame completed, CAP allocate corresponding uplink short signaling channel resources in uplink channel of N frame for the user scheduled in downlink of N frame, used for sending group acknowledge response Group ACK;
Step S702: according to the allocated uplink short signaling channel resources, CAP encapsulate corresponding feedback resources control channel signaling, this feedback resources control signaling is used for indicating allocation of feedback resources.
Step S703: CAP sends this feedback resources control signaling in control channel of N frame, this feedback resources control signaling is uplink short signaling channel resources control signaling.

Preferably, CAP also sends downlink transmission resource indication signaling in the control channel of N frame.

Preferably, it also comprises:
Step S704: the user, STA being scheduled in downlink carry out demodulation on Control channel in N frame, obtains corresponding downlink transmission resource indication signaling information and uplink short signaling channel resource control signaling information.

Preferably, it also comprises:
Step S705: after the user, STA being scheduled in downlink received the one or more MAC groups MPDU in corresponding downlink transmission resource, generate the acknowledgement response of one or more MPDU, and encapsulate the acknowledgement response of one or more MPDU as MAC layer group acknowledgement response Group ACK, and send to CAP in the uplink short signaling channel of N frame.
Step S706: after the scheduling of uplink service data and resource allocation of N frame completed, CAP allocate corresponding downlink short signaling channel resources in downlink of N+1 frame, for the user scheduled in uplink of N frame, used for sending group acknowledge response Group ACK;
Step S707: according to the allocated downlink short signaling channel resources, CAP encapsulate corresponding feedback resources control signaling;
Step S708: CAP sends this feedback resources control signaling in control channel of N+1 frame, this feedback resources control signaling is short signaling channel resources control signaling.

Preferably, CAP also sends uplink transmission resource indication signaling in the control channel of N+1 frame.

Preferably, it also comprises:
Step S709: user, the STA being scheduledin in uplink carry out demodulation on Control channel in N frame, obtains corresponding uplink transmission resource indication signaling information and send service data to CAP; carry out demodulation on Control channel in N+1 frame, obtains corresponding downlink short signaling channel resource control signaling information.

Preferably, it also comprises:
Step S710: after the CPA received the one or more MAC groups MPDU in corresponding uplink transmission resource in N frame, generate the acknowledgement response of one or more MPDU, and encapsulate the said acknowledgement response of one or more MPDU as MAC layer group acknowledgement response Group ACK, and send in the downlink short signaling channel of N+1 frame.

Preferably, this control channel can be used for indicating the feedback resource allocation of the corresponding downlink short signaling channel of this frame to user scheduled in uplink of previous frame, used for CAP to send group acknowledge response Group ACK; And/or, indicate the feedback resource allocation of the uplink short signaling channel to user scheduled in downlink of this frame, used for STA to send Group ACK.

### Implementation Example 9

The ninth embodiment of the present invention is anspecific application example.

Figure 8 shows a diagram of the system frame structure of scheduling transmission processprovided in an application examples.

As shown in figure 8, preamble sequence, system information channel,control channel, downlink short signaling channel, downlink service transmission channel, downlink guard interval DGI, uplink sounding channel, uplink scheduling request channel, uplink short signaling channel, uplink service transmission channel, uplink Random Access Channel, and Uplink guard interval UGI.

Wherein, preamble sequences comprise short preamble sequence and long preamble sequence.

A CAP is associated with 3 STAs: STA1, STA2 and STA3. Wherein, downlink general instant ACK strategy include steps as following:
Step S801: after the scheduling of downlink service data and resource allocation of N frame completed, CAP allocate corresponding feeback resources in uplink of N frame for the user scheduled in downlink of N frame, used for sending group acknowledge response Group ACK, As shown in figure 8, allocate corresponding uplink short signaling channel resources in uplink of N frame for STA1 and STA2 in CCH of N frame, used for sending Group ACK.
Step S802: CAP generate corresponding CCH signaling for aforesaid ACK, and sends in the CCH control channel of N frame.
Step S803: STA1 and STA2 carry out demodulation on Control channel CCH, obtains corresponding downlink TCH resource and uplink ACK feedback resource. after the STA1 and STA2 received the one or more MAC groups MPDU in corresponding downlink transmission resource, generate the acknowledgement response of one or more MPDU, and encapsulate the acknowledgement response of one or more MPDU as MAC layer group acknowledgement response Group ACK, and send the instant Group ACK in the allocated uplink short signaling channel so as to acknowledge.

Uplink general instant ACK strategy include steps as following,
Step S804: after the scheduling of uplink of N frame completed, CAP determine the transmission user of uplink transmission channel UL-TCH of N frame is STA3, then ensure to allocate corresponding downlink resources in N+1 frame, for the user STA3 scheduled in uplink of N frame, used for sending instant ACK. For instance, in Fig 8, scheduled uplink STA3 in N frame, then allocate DL short signaling resource for STA3 in N+1 frame, used for instant ACK.
Step S805: CAP generate corresponding CCH signaling for aforesaid ACK, and sends in the CCH control channel of N+1 frame.
Step S806: after STA3 demodulate on CCH in N frame, obtain corresponding uplink TCH resource, and send service data in UL-TCH.
Step S807: after CAP received the one or more MAC groups MPDU in UL-TCH of STA3, generate the acknowledgement response of one or more MPDU, and encapsulate the acknowledgement response of one or more MPDU as MAC layer group acknowledgement response Group ACK, and send the Group ACK in downlink short signaling channel of N+1 frame.

### Implementation Example 10

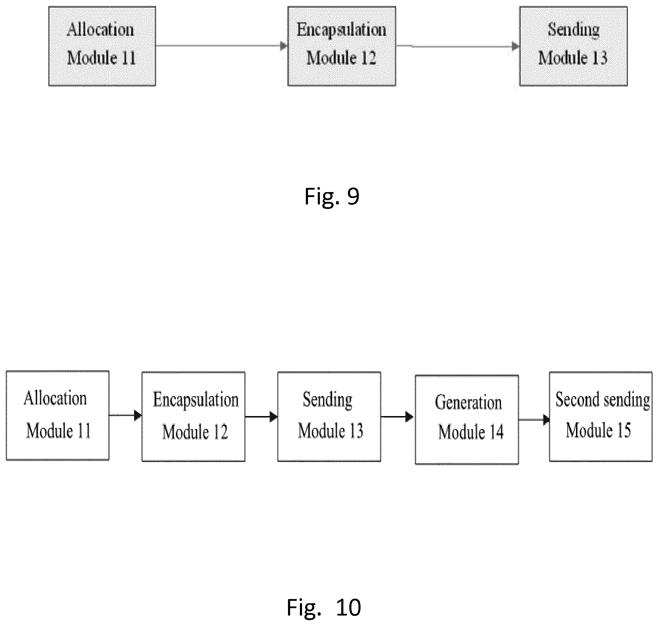

In order to achieve the above method, The embodiment of the present invention proposes a kind of apparatus for frame acknowledgment, as shown in Figure 9, comprising:
allocation module 11, being used for allocating feedback resources in current physical frame after the scheduling of downlink service data and resource allocation completed; or, allocating feedback resources in downlink of next frame after the scheduling of uplink service data and resource allocation completed, used for sending group acknowledge response Group ACK;
Encapsulation Module 12, being used for encapsulating corresponding feedback resources control signaling according to the allocated feedback resources, this feedback resources control signaling is used for indicating allocation of feedback resources. and,
Sending module 13, being used for sending this feedback resources control signaling in control channel of physical frame.

Preferably, this feedback resource is: a transmission channel resource, or a short messaging signaling channel resource.

Further, downlink ACK strategy, aforesaid apparatus has the followingcharacteristics:
allocation module 11, being concretely used for CAP allocate corresponding uplink transmission channel resources or uplink short signaling channel resources in uplink of N frame for the user scheduled in downlink of N frame after the scheduling of downlink service data and resource allocation of N frame completed,used for sending MAC layer group acknowledge response Group ACK;
Encapsulation Module 12, being concretely used for encapsulating corresponding feedback resources control signaling according to the allocated uplink transmission channel resources or uplink short signaling channel resources;
Sending module 13, being concretely used for sending this feedback resources control signaling in control channel of N frame.

Further, uplink ACK strategy, aforesaid apparatus also has the followingcharacteristics:
allocation module 11, being also used for CAP allocate corresponding downlink feedback resources or downlink short signaling in downlink of N+1 frame for the user scheduled in uplink of N frame after the scheduling of downlink service data and resource allocation of N frame completed,used for sending group acknowledge response Group ACK;
Encapsulation Module 12, being also used for encapsulating corresponding feedback resources control signaling according to the allocated downlink transmission channel resources or downlink short signaling channel resources;
Sending module 13, being concretely used for sending this feedback resources control signaling in control channel of N+1 frame.

As shown in Figure 10, further, above-mentioned apparatus also comprise:
Generation module 14, being used for generating acknowledgement response of one or more MPDU after receiving group in corresponding uplink transmission resource, and encapsulating said acknowledgement response of one or more MPDU as MAC layer group acknowledgement response Group ACK;
Second sending Module 15, being used for sending this Group ACK in downlink transmission channel or downlink short signaling channel ofN+1 frame.

Further, aforesaid apparatus also has following characteristics:
Control channel can be used for indicating feedback resource allocation of the corresponding downlink transmission channel or downlink short signaling channel of this frame to user scheduled in uplink of previous frame, used for CAP to send group acknowledge response Group ACK ; And/or, indicating feedback resource allocation of uplink transmission channel or uplink short signaling channel to user scheduled in downlink of this frame, used for STA to send Group ACK.

### Implementation Example 11

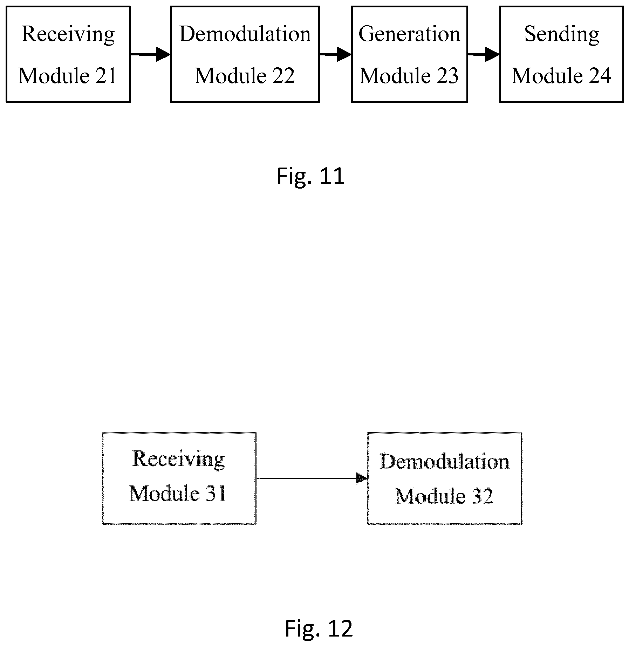

In order to achieve the above method, The embodiment of the present invention proposes a kind of apparatus (terminal device STA) for frame acknowledgment, as shown in Figure 11, comprising:
Receiving Module 21, used for receiving downlink physical frame;
Demodulation Module 22, used for carrying out demodulation on Control channel of physical frame, obtains corresponding downlink transmission resource indication signaling information and feedback resource control signaling information.

Preferably, this feedback resource is: uplink transmission channel resource, or, uplink short signaling channel resource.

Above-mentioned apparatus can also comprise:
Generation module 23, being used for generating acknowledgement response of one or more MPDU after receiving one or more groups in corresponding downlink transmission resource, and encapsulating acknowledgement response of the said one or more MPDU as MAC layer group acknowledgement response Group ACK; and,
Sending Module 24, being used for sending this Group ACK in uplink transmission channel or uplink short signaling channel of current frame.

### Implementation Example 12

In order to achieve the above method, The embodiment of the present invention proposes a kind of apparatus (terminaldeviceSTA) for frame acknowledgment, as shown in Figure 12, comprising:
Receiving Module 31, used for receiving downlink physical frame;
Demodulation Module 32, used for carrying out demodulation on Control channel of physical frame, obtains corresponding uplink transmission resource indication signaling information, also used for carrying out demodulation on Control channel of next frame, obtains corresponding feedback resource control signaling information.

Preferably, this feedback resource is: downlink transmission channel resource, or, downlink short signaling channel resource.

Employ the method and device adopted in embodiments of this present invention, realize carry out transmission and acknowledgement of data packet with form of MAC frame at MAC layer, and this packet acknowledge taking minimum complexity as cost, it is achieved that minimum acknowledgement time delay and very high reliability; Short signaling channel is in the front, and time delay is little, and reaction is fast, it is conducive to resource scheduling and retransmitting scheduling ; and group aggregation frame G-MPDU seldom comprise fragment, reduce use of fragment.

Unless otherwise specific statement, term such as process, calculate, compute, determine, display etc can refer to one or more processing or computing system or similar devices action and/or process, said action and/or process will be represented as data operation of physics (such as electronics) quantity in the memory or register of processing system, and be converted into other data which similarly by representing as physical quantity in memory, register or other this type information store device, transmitting or display equipment. Information and signal can use any one in multiple different techniques and methods to represent. Such as, data, instruction, order, information, signal, bit, symbol and chip mentioned in above description can represent by voltage, electric current, electromagnetic wave, magnetic field or particle, light field or particle or its any combination.

It should be known that the particular order of step in disclosed process or level are the examples of illustrative methods. Based on design preference, it should be understood that the particular order of the step in process or level can be rearranged when not departing from scope of protection in this disclosure. Appended method claim gives element of various step with exemplary order, and is not to be limited to described particular order or level.

In above-mentioned detailed description, various feature is combined together in single embodiment, to simplify this disclosure. Should not be interpreted as reflecting such intention by this kind of open method, that is, the embodiment of claimed theme needs the more feature of feature clearly stated in each claim. On the contrary, as reflected in appended claims, the present invention is in the state fewer than whole features of disclosed single embodiment. Therefore, appending claims is clearly incorporated in describing in detail hereby, and wherein each claim is alone as the preferred embodiment that present invention is independent.

Those skilled in the art should understand, the logic frame, module, circuit and algorithm steps for various explanations described in embodiment Combined with this article herein, all can be implemented as electronic hardware, computer software or its combination. In order to illustrate clearly exchangeability between hardware and software, the above various parts , frame, module, circuit and steps for explanation are all carried out general description around its function . As to this kind of function implemented ashardware or software, that depends on specific application and the design constraint condition whole system applied. For each application-specific, Those skilled in the art can implement described function through a flexible way, but, this kind of implementation decision should not be construed as deviate from scope of protection in the present disclosure.

The method and algorithm steps for various explanations described in embodiment combined with this article herein, all can be directly reflected inhardware, software module performed by processor or their combination. Software module can be arranged in RAM memory, flash memory, ROM memory, EPROM memory, EEPROM memory, register, hard disk, mobile disk, CD-ROM or other form any storage medium well known in the art. An kind of exemplary storage medium is connected to a processor device, thus enables processor device can read information from it, and write information to this storage medium . Certainly, storage medium can also be as a part of processor device. Processor device and storage medium can be arranged in ASIC. This ASIC can be arranged in user terminal. Certainly, processor device and store medium can also be present in user terminal as discrete assembly.

Such as, for software simulating, the technology described in the application can implement by the module (process, function etc.) performing said function described in the application. These software codes can be stored in memory unit and perform by processor. Memory unit can be implemented in processor device, it is also possible to be implemented outside processor device, in the case of the latter, it is coupled to processor device by communication via various means, and these are all well known in the art.

Above description comprises the citing of one or more embodiment. Certainly, describing all possible combination of parts or method in order to describe foresaid embodiment is impossible, but ordinary skill in the art should recognize thatthat each embodiment can do further combinations and permutations. Therefore, embodiment described herein is intended to cover all such changes, modifications and variations which comes within scope of protection requested by appended claims. In addition, with regard term " comprising " used in specification or claims, the cover mode of this word is similar to term "including ", just as " including, " such as explanation of conjunctionused in claim. In addition, using any one term in specification or claims " or " is to be represented " non-exclusionism or ".

## Claims

1. A method for frame acknowledgment, comprising:
allocating feedback resources in the downlink of a next frame after the scheduling of uplink service data and resource allocation is completed, wherein the allocating is for sending a group acknowledgement, Group ACK, from a central access point, CAP, to a terminal, STA, (S101) ;
encapsulating corresponding feedback resource control signaling according to the allocated feedback resources, wherein the feedback resources control signaling is used for indicating allocation of feedback resources (S102); and
sending the feedback resource control signaling in a control channel of the physical frame (S103), wherein said feedback resource is a transmission channel resource or a short signaling channel resource; and the method further comprises:
allocating downlink transmission channel resources or downlink short signaling channel resources in downlink of the (N+1)th frame for a user scheduled in uplink of the Nth frame after the scheduling of uplink service data and resource allocation of the Nth frame completed, wherein the allocating is used for sending Medium Access Control, MAC, layer group acknowledgement response Group ACK.
encapsulating feedback resources control signaling according to the allocated downlink transmission channel resources or downlink short signaling channel resources; and
sending this feedback resources control signaling in control channel of the (N+1)th frame.

2. The method of claim 1, further comprising:
allocating uplink transmission channel resources or uplink short signaling channel resources in uplink of an Nth frame for a user scheduled in downlink of the Nth frame after the scheduling of downlink service data and resource allocation of the Nth frame is completed, the allocated feedback resources are used for sending MAC layer group acknowledgment response Group ACK;
encapsulating feedback resources control signaling according to the allocated uplink transmission channel resources or uplink short signaling channel resources;
sending this feedback resources control signaling in control channel of the Nth frame.

3. The method of claim 2, wherein the user scheduled in downlink carries out demodulation on control channel in the Nth frame, obtains corresponding downlink transmission resource indication signaling information and feedback resource control signaling information; wherein said feedback resource is an uplink transmission channel resource, or an uplink short signaling channel resource.

4. The method of claim 3, further comprising:
after the user received the one or more MAC groups MAC protocol data unit, MPDU, in said downlink transmission resource, generating acknowledgement response of one or more MPDU, and encapsulating the acknowledgement response of one or more MPDU as MAC layer group acknowledgement response Group ACKs, and sending to the CAP in uplink transmission channel or uplink short signaling channel of the Nth frame.

5. The method of claim 1, wherein the user scheduled in uplink carries out demodulation on control channel in the Nth frame, obtains uplink transmission resource indication signaling information, carries out demodulation on control channel in the (N+1)th frame, obtains feedback resource control signaling information; wherein, said feedback resource is: downlink transmission channel resource, or, downlink short signaling channel resource.

6. The method of claim 5, further comprising:
after receiving the one or more MAC groups MPDU in said downlink transmission resource, the CAP generating acknowledgement response of one or more MPDU, and encapsulating the acknowledgement response of one or more MPDU as MAC layer group acknowledgement response, and sending in downlink transmission channel or downlink short signaling channel of the (N+1)th frame.

7. The method of claim 1, wherein
said control channel is used for indicating a first feedback resource allocation of said downlink transmission channel or downlink short signaling channel of this frame to a user scheduled in uplink of previous frame, information of the first feedback resource allocation being used for the CAP to send group acknowledgment response Group ACK ; and said control channel is used for indicating a second feedback resource allocation of the link transmission channel or uplink short signaling channel to a user scheduled in downlink of this frame, information of the second feedback resource being used for the STA to send said Group ACK.

8. An apparatus for frame acknowledgment, comprising:
a memory; and
a processor coupled to the memory;
the processor or an allocation module (11) being used for allocating feedback resources in the downlink of a next frame after the scheduling of uplink service data and resource allocation is completed, the allocating being used for sending group acknowledgment response Group ACK, wherein the group acknowledgement response Group ACK is sent from a terminal, STA, to a central access point, CAP, in uplink transmission, and is sent from a CAP to a STA in downlink transmission;
the processor or an encapsulation module (12) being used for encapsulating feedback resource control signaling according to the allocated feedback resources, said feedback resource control signaling is used for indicating allocation of feedback resources; and,
the processor or a sending module (13) being used for sending said feedback resource control signaling in control channel of physical frame,
wherein the processor or at least one of the modules (11, 12, 13) is further configured for:
the CAP allocating downlink transmission channel resources or downlink short signaling channel resources in downlink of the (N+1)th frame for a user scheduled in uplink of the Nth frame after the scheduling of uplink service data and resource allocation of the Nth frame completed, wherein the allocating is used for sending MAC layer group acknowledgement response Group ACK.
encapsulating feedback resources control signaling according to the allocated downlink transmission channel resources or downlink short signaling channel resources; and
sending this feedback resources control signaling in control channel of the (N+1)th frame.

9. The apparatus of claim 8, wherein said feedback resource is a transmission channel resource or a short signaling channel resource.

10. The apparatus of claim 8 or 9, further comprising:
the processor or said allocation module (11) being concretely used for the CAP allocating uplink transmission channel resources or uplink short signaling channel resources in uplink of the Nth frame for the user scheduled in downlink of N frame after the scheduling of downlink service data and resource allocation of the Nth frame completed, used for sending MAC layer group acknowledge response Group ACK ;
the processor or said encapsulation module (12) being concretely used for encapsulating said feedback resources control signaling according to the allocated uplink transmission channel resources or uplink short signaling channel resources;
the processor or said sending module (13) being concretely used for sending this feedback resources control signaling in control channel of the Nth frame.

11. The apparatus of claim 10, further comprising:
the processor or a generation module (14) being used for generating acknowledgement response of one or more MPDU after receiving MAC layer group in said uplink transmission resource, and encapsulating said acknowledgement response of one or more MPDU as MAC layer group acknowledgement response Group ACK;
the processor or a second sending module (15) being used for sending this Group ACK in downlink transmission channel or downlink short signaling channel of the (N+1)th frame.

12. The apparatus of claim 10, further comprising:
said control channel configured for indicating a first feedback resource allocation of said downlink transmission channel or downlink short signaling channel of this frame to a user scheduled in uplink of previous frame, information of the first feedback resource allocation being used for the CAP to send group acknowledgement response Group ACK ; and/or for indicating a second feedback resource allocation of the link transmission channel or uplink short signaling channel to a user scheduled in downlink of this frame, information of the second feedback resource being used for STA to send said Group ACK.

## Patentansprüche

1. Verfahren zur Frame-Quittierung, umfassend:
Zuordnen von Feedback-Ressourcen in dem Downlink eines nächsten Frames nach Abschluss der Einteilung von Uplink-Servicedaten und Ressourcen-Zuordnung, wobei die Zuordnung zum Senden einer Gruppen-Quittierung, Group ACK, von einem zentralen Zugangspunkt, CAP, an ein Terminal, STA, (S101) erfolgt.
Verkapseln einer entsprechenden Feedback-Ressourcen-Steuerungs-Signalisierung gemäß den zugeordneten Feedback-Ressourcen, wobei die Feedback-Ressourcen-Steuerungs-Signalisierung zum Anzeigen der Zuordnung von Feedback-Ressourcen (S102) verwendet wird; und
Senden der Feedback-Ressourcen-Steuerungs-Signalisierung in einem Steuerkanal des physikalischen Frames (S103), wobei die Feedback-Ressource eine Übertragungskanal-Ressource oder eine Kurzsignalisierungskanal-Ressource ist; und das Verfahren ferner umfasst:
Zuordnen von Downlink-Übertragungskanal-Ressourcen oder Downlink-Kurzsignalisierungskanal-Ressourcen im Downlink des (N+1)-ten Frames für einen Benutzer, der im Uplink des N-ten Frames eingeteilt ist, nachdem die Einteilung von Uplink-Servicedaten und die Ressourcen-Zuordnung des N-ten Frames abgeschlossen ist, wobei die Zuordnung zum Senden von Medium Access Control, MAC, Schichtengruppen- Quittierungsantwort Gruppen-ACK verwendet wird.
Verkapseln der Feedback-Ressourcen-Steuerungssignalisierung gemäß den zugeordneten Downlink-Übertragungskanal-Ressourcen oder Downlink-Kurzsignalisierungskanal-Ressourcen; und
Senden dieser Feedback-Ressourcen-Steuerungssignalisierung im Steuerkanal des (N+1)-ten Frames.

2. Verfahren nach Anspruch 1, ferner umfassend:
Zuordnen von Uplink-Übertragungskanal-Ressourcen oder Uplink-Kurzsignalisierungskanal-Ressourcen im Uplink eines N-ten Frames für einen Benutzer, der im Downlink des N-ten Frames eingeteilt ist, nachdem die Einteilung von Downlink-Servicedaten und Ressourcenzuordnung des N-ten Frames abgeschlossen ist, wobei die zugewiesenen Feedback-Ressourcen zum Senden von MAC-Schichtengruppen-Quittierungsantwort Gruppen-ACK verwendet werden;
Verkapseln der Feedback-Ressourcen-Steuerungssignalisierung gemäß den zugeordneten Uplink-Übertragungskanal-Ressourcen oder Uplink-Kurzsignalisierungskanal-Ressourcen;
Senden dieser Feedback-Ressourcen-Steuerungssignalisierung im Steuerkanal des N-ten Frames.

3. Verfahren nach Anspruch 2, wobei der im Downlink eingeteilte Benutzer eine Demodulation auf dem Steuerkanal im N-ten Frame durchführt, entsprechende Downlink-Übertragungsressourcenanzeige-Signalisierungsinformationen und Feedback-Ressourcen-Steuerungs-Signalisierungsinformationen erhält; wobei die Feedback-Ressource eine Uplink-Übertragungskanal-Ressource oder eine Uplink-Kurzsignalisierungskanal-Ressource ist.

4. Verfahren nach Anspruch 3, ferner umfassend:
nachdem der Benutzer die eine oder mehrere MAC-Gruppen MAC-Protokolldateneinheit, MPDU, in der Downlink-ÜbertragungsRessource empfangen hat, Erzeugen einer Quittierungsantwort von einer oder mehrerer MPDUs und Verkapseln der Quittierungsantwort einer oder mehrerer MPDUs als MAC-Schichtengruppen-Quittierung Gruppen-ACKs und Senden an die CAP im Uplink-Übertragungskanal oder Uplink-Kurzsignalisierungskanal des N-ten Frames.

5. Verfahren nach Anspruch 1, wobei der in der Uplink-Verbindung eingeteilte Benutzer eine Demodulation auf dem Steuerkanal im N-ten Frame durchführt, eine Signalisierungsinformation für die Anzeige der Uplinkübertragungsressourcen erhält, eine Demodulation auf dem Steuerkanal im (N+1)-ten Frame durchführt, eine Feedback-Ressourcen-Steuerungssignalisierungsinformation erhält; wobei die Feedback-Ressource folgendes ist: eine Downlinkübertragungsressource oder eine Downlinkverbindungskurzsignalisierungskanal-Ressource.

6. Verfahren nach Anspruch 5, ferner umfassend:
dass nach dem Empfangen der einen oder mehreren MAC-Gruppen MPDU in der Downlink-Übertragungsressource, erzeugt die CAP eine Quittierungsantwort einer oder mehrerer MPDU erzeugt und die Quittierungsantwort einer oder mehrerer MPDU als Quittierungsantwort auf die MAC-Schichtgruppe kapselt, und in einem Downlink-Übertragungskanal oder einem Downlink-Kurzsignalisierungskanals des (N+1)-ten Frames sendet.

7. Verfahren nach Anspruch 1, wobei der Steuerkanal zum Anzeigen einer ersten Feedback-Ressourcen-Zuordnung des Downlink-Übertragungskanals oder des Downlink-Kurzsignalisierungskanals dieses Frames an einen Benutzer verwendet wird, der in der Uplink-Verbindung des vorherigen Frames eingeteilt ist, wobei Informationen der ersten Feedback-Ressourcen-Zuordnung für die CAP verwendet werden, um eine Gruppen-Quittierung Gruppe ACK zu senden ; und der Steuerkanal zum Anzeigen einer zweiten Feedback-Ressourcen-Zuordnung des Link-Übertragungskanals oder des Uplink-Kurzsignalisierungskanals an einen Benutzer verwendet wird, der in der Downlink-Verbindung dieses Frames eingeteilt ist, wobei Informationen der zweiten Feedback-Ressource für das STA zum Senden der Gruppe ACK verwendet werden.

8. Vorrichtung zur Frame-Quittierung, umfassend:
einen Speicher; und
einen Prozessor, der mit dem Speicher verbunden ist;
wobei der Prozessor oder ein Zuordnungsmodul (11) zum Zuordnen von Feedback-Ressourcen im Downlink eines nächsten Frames verwendet wird, nachdem die Einteilung von Uplink-Servicedaten und Ressourcen-Zuordnung abgeschlossen ist, wobei die Zuordnung zum Senden von Gruppen-Quittierungsantwort Gruppen ACK verwendet wird, wobei die Gruppen-Quittierungsantwort Gruppen ACK von einem Endgerät, STA, zu einem zentralen Zugangspunkt, CAP, in Uplinkübertragung gesendet wird und von einem CAP zu einem STA in Downlinkübertragung gesendet wird;
der Prozessor oder ein Verkapselungsmodul (12) zum Verkapseln von Feedback-Ressourcensteuerungssignalen gemäß den zugeordneten Feedback-Ressourcen verwendet wird, wobei das Feedback-Ressourcensteuerungssignal zum Anzeigen der Zuordnung von Feedback-Ressourcen verwendet wird; und,
der Prozessor oder ein Sendemodul (13) zum Senden des Feedback-Ressourcensteuerungssignals im Steuerkanal des physikalischen Frames verwendet wird,
wobei der Prozessor oder mindestens eines der Module (11, 12, 13) ferner konfiguriert dafür ist:
dass die CAP die Downlink-Übertragungskanal-Ressourcen oder Downlink-Kurzsignalisierungskanal-Ressourcen im Downlink des (N+1)-ten Frames für einen Benutzer zuordnet, der im Uplink des N-ten Frames nach der Einteilung von Uplink-Servicedaten und Ressourcen-Zuordnung des N-ten Frames eingeteilt ist, wobei die Zuordnung zum Senden von MAC-Layer-Gruppen-Quittierungsantwort Gruppen ACK verwendet wird.
Verkapseln der Feedback-Ressourcen-Steuerungssignalisierung gemäß den zugeordneten Downlink-Übertragungskanal-Ressourcen oder Downlink-Kurzsignalisierungskanal-Ressourcen; und
Senden dieser Feedback-Ressourcen-Steuerungssignalisierung im Steuerkanal des (N+1)-ten Frames.

9. Vorrichtung nach Anspruch 8, wobei die Feedback-ressource eine Übertragungskanal-Ressource oder eine Kurzsignalisierungskanal-Ressource ist.

10. Die Vorrichtung nach Anspruch 8 oder 9, ferner umfassend:
wobei der Prozessor oder das Zuordnungsmodul (11) konkret für die CAP-Zuordnung von Uplink-Übertragungskanal-Ressourcen oder Uplink-Kurzsignalisierungskanal-Ressourcen im Uplink des N-ten Frames für den Benutzer verwendet wird, der im Downlink des N-ten Frames nach der Einteilung von Downlink-Servicedaten und Ressourcen-Zuordnung des N-ten Frames eingeteilt ist, die zum Senden von MAC-Layer-Gruppen-Quittierungsantworten der Gruppen ACK verwendet wird;
der Prozessor oder das Verkapselungsmodul (12) konkret zum Verkapseln des Feedback-Ressourcensteuerungssignals gemäß den zugeordneten Uplinkübertragungskanal-Ressourcen oder Uplinkkurzsignalisierungskanal-Ressourcen verwendet wird;
der Prozessor oder das Sendemodul (13) konkret zum Senden dieses Feedback-Ressourcen-Steuerungssignals im Steuerkanal des N-ten Frames verwendet wird.

11. Vorrichtung nach Anspruch 10, ferner umfassend:
den Prozessor oder ein Erzeugungsmodul (14), das zum Erzeugen einer Quittierungsantwort einer oder mehrerer MPDU nach dem Empfangen einer MAC-Schichtengruppe in der Uplinkübertragungsressource verwendet wird, und zum Verkapseln der Quittierungsantwort einer oder mehrerer MPDU als MAC-Schichtgruppen Quittierungsantwort Gruppe ACK;
der Prozessor oder ein zweites Sendemodul (15), das zum Senden dieser Gruppe ACK in einem Downlink-Übertragungskanal oder einem Downlink-Kurzsignalisierungskanal des (N+1)-ten Frames verwendet wird.

12. Vorrichtung nach Anspruch 10, ferner umfassend:
den Steuerkanal, der konfiguriert ist, um eine erste Feedback-Ressourcen-Zuordnung des Downlink-Übertragungskanals oder des Downlink-Kurzsignalisierungskanals dieses Frames an einen Benutzer anzuzeigen, der in der Uplink-Verbindung des vorherigen Frames eingeteilt ist, wobei Informationen der ersten Feedback-Ressourcen-Zuordnung für die CAP verwendet werden, um eine Gruppen-Quittierung der Antwortgruppe ACK ; zu senden und/oder um eine zweite Feedback-Ressourcen-Zuordnung des Linkübertragungskanals oder des Uplink-Kurzsignalisierungskanals an einen Benutzer anzuzeigen, der in der Downlink-Verbindung dieses Frames eingeteilt ist, wobei Informationen der zweiten Feedback-Ressource für STA verwendet werden, um die Gruppe ACK zu senden.

## Revendications

1. Un procédé d'accusé de réception de trame, comprenant les étapes consistant à :
allouer des ressources de retour en liaison descendante d'une trame suivante après l'achèvement de la planification d'une allocation de ressources et de données de service en liaison montante, dans lequel l'allocation est pour l'envoi d'un acquittement de groupe, Group ACK, depuis un point d'accès central, CAP, vers un terminal, STA, (S101) ;
encapsuler une signalisation de commande de ressource de retour en fonction des ressources de retour allouées, dans lequel la signalisation de commande de ressources de retour est utilisée pour indiquer une allocation de ressources de retour (S102) ; et
transmettre la signalisation de commande de ressource de retour dans un canal de commande de la trame physique (S103), dans lequel ladite ressource de retour est une ressource de canal de transmission ou une ressource de canal de signalisation courte ;
et le procédé comporte en outre les étapes consistant à :
allouer des ressources de canal de transmission en liaison descendante ou des ressources de canal de signalisation courtes en liaison descendante de la trame N+1 pour un utilisateur programmé en liaison montante de la trame N à la suite de l'achèvement de la planification d'allocation de ressources et de données de service en liaison montante de la trame N,
dans lequel l'allocation est utilisée pour transmettre un ACK de Groupe de réponse d'acquittement de groupe de couche de Commande d'Accès de Médium, MAC,
encapsuler la signalisation de commande de ressource de retour en fonction des ressources de canal de transmission en liaison descendante allouées ou des ressources de canal de signalisation courtes allouées ; et
transmettre la signalisation de commande de ressources de retour dans le canal de commande de la trame N+1.

2. Le procédé de la revendication 1, comprenant en outre :
l'allocation de ressources de canal de transmission en liaison montante ou de ressources de canal de signalisation courtes en liaison montante dans la liaison montante de la trame N pour un utilisateur planifié en liaison descendante de la trame N après l'achèvement de la planification d'allocation de ressource et de données de services en liaison descendante de la trame N, les ressources de retour allouées étant utilisées pour transmettre un ACK de Groupe de réponse d'acquittement de groupe de couche MAC ;
encapsuler la signalisation de commande de ressources de retour en fonction des ressources de canal de transmission en liaison montante allouées ou des ressources de canal de signalisation courte en liaison montante ;
transmettre cette signalisation de commande de ressources de retour dans un canal de contrôle de la trame N.

3. Le procédé de la revendication 2, dans lequel l'utilisateur planifié en liaison descendante exécute une démodulation sur le canal de comment dans la trame N, obtient une information de signalisation indicatrice de ressources de transmission en liaison descendante correspondante et une information de signalisation de commande de ressources de retour ; dans lequel ladite ressource de retour est une ressource de canal de transmission en liaison montante, ou une ressource de canal de signalisation courte en liaison montante.

4. Le procédé de la revendication 3, comprenant en outre les étapes consistant à :
après que l'utilisateur ait reçu une ou plusieurs unités de données de protocole MAC de groupes MAC, MPDU, au sein de ladite ressource de transmission en liaison descendante, générer une réponse d'acquittement d'une ou plusieurs MDPU, et encapsuler la réponse d'acquittement d'une ou plusieurs MPDU en tant que ACK de Groupe de réponse d'acquittement de groupe de couche MAC, et transmettre au CAP dans un canal de transmission en liaison montante ou un canal de signalisation court en liaison montante de la trame N.

5. Le procédé de la revendication 1, dans lequel l'utilisateur planifié sur la liaison montante effectue une démodulation sur le canal de commande dans une trame N, obtient les informations de signalisation d'indication de ressource de transmission montante correspondantes, effectue une démodulation sur un canal de commande dans une trame N + 1, obtient une information de signalisation de commande de ressource de retour correspondante ; dans lequel, ladite ressource de retour est: une ressource de canal de transmission en liaison descendante, ou une ressource de canal de signalisation courte en liaison descendante.

6. Le procédé de la revendication 5, comprenant en outre :
après avoir reçu le ou les MPDU de groupes de MAC dans ladite ressource de transmission en liaison descendante, le CAP génère une réponse d'acquittement d'un ou plusieurs MPDU, et encapsule la réponse d'acquittement d'un ou plusieurs MPDU en tant que réponse d'acquittement de groupe de couche MAC, et envoie de la trame N+1 dans un canal de transmission en liaison descendante ou dans un canal de signalisation court en liaison descendante.

7. Le procédé de la revendication 1, dans lequel
ledit canal de commande est utilisé pour indiquer une première allocation de ressource de retour du canal de transmission correspondant en liaison descendante ou du canal de signalisation court en liaison descendante de cette trame, à un utilisateur planifié dans la liaison montante de la trame précédente, une information de ce que la première allocation de ressource de retour utilisée pour le CAP pour transmettre un ACK de Groupe de réponse d'acquittement de groupe ; et ledit canal de commande est utilisé pour indiquer une seconde allocation de ressource de retour du canal de transmission en liaison montante ou du canal de signalisation court en liaison montante à un utilisateur planifié en liaison descendante de cette trame, une information de ce que la seconde ressource de retour utilisée pour le STA pour transmettre ledit ACK de Groupe.

8. Un appareil d'accusé de réception de trame, comprenant :
une mémoire ; et
un processeur couplé à la mémoire ;
le processeur ou un module d'allocation (11) étant utilisé pour allouer des ressources de retour dans la liaison descendante d'une trame suivante à la suite de l'achèvement de la planification de l'allocation de ressources et de données de service en liaison montante, l'allocation étant utilisée pour transmettre un ACK de Groupe de réponse d'acquittement de groupe, dans lequel le ACK de Groupe de réponse d'acquittement de groupe est transmis depuis un terminal, STA, à un point d'accès central, CAP, en liaison montante, et est transmis depuis un CAP à un STA en liaison descendante ;
le processeur ou un module d'encapsulation (12) étant utilisé pour encapsuler une signalisation de commande de ressource de retour en fonction des ressources de retour allouées, ladite signalisation de commande de ressource de retour étant utilisée pour indiquer une allocation de ressources de retour ; et ,
le processeur ou un module d'envoi (13) étant utilisé pour transmettre ladite signalisation de commande de ressource de retour dans une trame physique d'un canal de commande,
dans lequel le processeur et au moins un des modules (11, 12, 13) est en outre configuré pour que :
le CAP alloue des ressources de canal de transmission en liaison descendante ou des ressources de canal de signalisation courte en liaison descendante de la trame N+1 pour un utilisateur planifié en liaison montante de la trame N à la suite de l'achèvement de la planification de l'allocation de ressource et de données de service en liaison montante de la trame N, dans lequel l'allocation est utilisée pour transmettre un ACK de Groupe de réponse d'acquittement de groupe de couche MAC,
encapsulant la signalisation de commande de ressources de retour en fonction des ressources de canal de transmission en liaison descendante allouée ou des ressources de canal de signalisation coute en liaison descendante ; et
envoyant cette signalisation de commande de ressources de retour dans un canal de commande de la trame N+1.

9. L'appareil de la revendication 8, dans lequel ladite ressource de retour est une ressource de canal de transmission ou une ressource de canal de signalisation courte.

10. L'appareil de la revendication 8 ou 9, comprenant en outre :
le processeur ou ledit module d'allocation (11) qui est utilisé concrètement pour que le CAP alloue des ressources de canal de transmission en liaison montante ou des ressources de canal de signalisation courte en liaison montante dans la liaison montante de la trame N pour l'utilisateur programmé en liaison descendante de la trame N à la suite de l'achèvement de la programmation des données de service en liaison descendante et de l'allocation de ressource de la trame N, utilisée pour transmettre le ACK de Groupe de réponse d'acquittement de groupe de couche MAC;
le processeur ou ledit module d'encapsulation (12) qui est utilisé concrètement pour encapsuler ladite signalisation de commande de ressource de retour en fonction des ressources de canal de transmission en liaison montante allouée ou des ressources de canal de signalisation courte en liaison montante ;
le processeur ou ledit module d'envoi (13) étant concrètement utilisé pour transmettre cette signalisation de commande de ressource de retour dans le canal de commande de la trame N.

11. L'appareil de la revendication 10 comprenant en outre :
le processeur ou un module de génération (14) utilisé pour générer une réponse d'acquittement d'un ou plusieurs MPDU à la suite de la réception du groupe de couche MAC dans lesdites ressources de transmission en liaison montante, et pour encapsuler ladite réponse d'acquittement d'un ou plusieurs MPDU en tant que ACK de Groupe de réponse d'acquittement de groupe de couche MAC ;
le processeur ou un second module d'envoi (15) utilisé pour transmettre ce ACK Groupe dans un canal de transmission en liaison descendante ou dans un canal de signalisation court en liaison descendante de la trame N+1.

12. L'appareil de la revendication 10, comprenant en outre,
ledit canal de commande est configuré pour indiquer une première allocation de ressource de retour dudit canal de transmission en liaison descendante ou du canal de signalisation courte en liaison descendante de cette trame pour un utilisateur planifié en liaison montante de la trame précédente, d'une information de ce que la première ressource de retour allouée utilisé pour le CAP pour transmettre un ACK de Groupe de réponse d'acquittement de groupe ; et/ou pour indiquer une seconde allocation de ressource de retour du canal de transmission de lien ou du canal de signalisation court en liaison montante à un utilisateur planifié en liaison descendante pour cette trame, d'une information de ce que la seconde ressource de retour utilisée pour le STA pour envoyer ledit ACK de Groupe.
